# EUROPEAN PATENT APPLICATION

(11) **EP 4 513 935 A1**
(43) Date of publication of application: **26.02.2025**
(21) Application number: 22938498.7
(22) Date of filing: 20.04.2022
(51) Int. Cl.: H04W 16/26

(54) **COMMUNICATION CONTROL RELATED TO INTERMEDIATE STATION**

(71) Applicant: Rakuten Mobile, Inc., Tokyo 158-0094 (JP)
(72) Inventor: AOYAGI Kenichiro, Tokyo 158-0094 (JP); KITAGAWA Koichiro, Tokyo 158-0094 (JP); SHETE Pankaj, Tokyo 158-0094 (JP); MUHAMMAD Awn, Tokyo 158-0094 (JP)
(74) Representative: Betten & Resch
(86) International application number: PCT/JP2022/018329
(87) International publication number: WO 2023/203698

(57) **Abstract**

A communication control apparatus has at least one processor that performs: by a mode switching unit, switching an intermediate station that interconnects a base station and a communication device between a base-station mode in which the intermediate station functions as a base station to the communication device and a relay-station mode in which the intermediate station relays communication signal between the base station and the communication device; and by a connection control unit, switching between a base-station priority mode in which the communication device is preferentially connected to a base-station-type intermediate station that functions as a base station to the communication device over a relay-station-type intermediate station that relays communication signal of the base station, and a relay-station priority mode in which the communication device is preferentially connected to the relay-station-type intermediate station over the base-station-type intermediate station.

## Description

### BACKGROUND OF THE INVENTION

### 1. Field of the Invention

The present disclosure relates to communication control for intermediate station.

### 2. Description of the Related Art

The number, types, and applications of wireless communication devices, represented by smartphones and Internet of Things (IoT) devices, continue to increase, and wireless communication standards continue to be expanded and improved. For example, the commercial service of the fifth generation mobile communication system known as "5G" started in 2018, and the standards are still being developed by the 3GPP (Third Generation Partnership Project). Efforts are also underway to develop standards for "6G" or the sixth generation mobile communication system, which would be the next generation of wireless communication standards following 5G.

Mobile communication networks for portable communication devices such as smartphones and cell phones (hereinafter collectively referred to as communication device(s)) are usually constructed by communication cells (hereinafter referred to as terrestrial communication cell(s) or fixed communication cell(s)) provided by base stations statically installed on the ground (hereinafter referred to as terrestrial base station(s) or fixed base station(s)). However, mobile communication cannot be performed outside fixed communication cells, and the quality of mobile communications might be low depending on time and/or place even within fixed communication cells.

To solve these problems, relay stations may be used, which can communicate with terrestrial base stations to expand the terrestrial communication cells. A communication device in the vicinity of a relay station can communicate indirectly with the terrestrial base station via the relay station, even if it cannot communicate directly with the terrestrial base station. In other words, relay stations relay communication signals between terrestrial base stations and communication devices.

Patent Literature 1: JP-A-2006-352894

### SUMMARY OF THE INVENTION

As a result of the independent investigation, the inventor has come to recognize that relay stations can be used in a variety of ways. For example, the functions required of relay stations for terrestrial base station and for non-terrestrial base station such as communication satellite, may differ depending on usage and/or situation.

The present disclosure was made in consideration of this situation, and its purpose is to provide a communication control apparatus and the like that can appropriately control communication of an intermediate station that interconnects a base station and a communication device.

In order to solve the above problem, a communication control apparatus in a certain aspect of the present disclosure comprises at least one processor that performs, by a mode switching unit, switching an intermediate station that interconnects a base station and a communication device between a base-station mode in which the intermediate station functions as a base station to the communication device and a relay-station mode in which the intermediate station relays communication signal between the base station and the communication device.

According to this aspect, communication between a base station and a communication device can be appropriately controlled, by switching an intermediate station between the base-station mode and the relay-station mode.

Another aspect of the present disclosure is also a communication control apparatus. The apparatus comprises at least one processor that performs, by a connection control unit, causing a base-station-type intermediate station that interconnects a base station and a communication device and functions as a base station to the communication device, to connect with the communication device preferentially to a relay-station-type intermediate station that relays communication signal of the base station.

Further another aspect of the present disclosure is also a communication control apparatus. The apparatus comprises at least one processor that performs, by a connection control unit, causing a relay-station-type intermediate station that interconnects a base station and a communication device and relays communication signal of the base station, to connect with the communication device preferentially to a base-station-type intermediate station that functions as a base station to the communication device.

Further another aspect of the present disclosure is a communication control method. The method comprises switching an intermediate station that interconnects a base station and a communication device between a base-station mode in which the intermediate station functions as a base station to the communication device and a relay-station mode in which the intermediate station relays communication signal between the base station and the communication device.

Further another aspect of the present disclosure is also a communication control method. The method comprises switching between a base-station priority mode in which a communication device is preferentially connected to a base-station-type intermediate station that interconnects a base station and the communication device and functions as a base station to the communication device, over a relay-station-type intermediate station that relays communication signal of the base station, and a relay-station priority mode in which the communication device is preferentially connected to the relay-station-type intermediate station over the base-station-type intermediate station.

Further another aspect of the present disclosure is a computer-readable medium. The computer-readable medium stores a communication control program causing a computer to perform switching an intermediate station that interconnects a base station and a communication device between a base-station mode in which the intermediate station functions as a base station to the communication device and a relay-station mode in which the intermediate station relays communication signal between the base station and the communication device.

Further another aspect of the present disclosure is also a computer-readable medium. The computer-readable medium stores a communication control program causing a computer to perform switching between a base-station priority mode in which a communication device is preferentially connected to a base-station-type intermediate station that interconnects a base station and the communication device and functions as a base station to the communication device, over a relay-station-type intermediate station that relays communication signal of the base station, and a relay-station priority mode in which the communication device is preferentially connected to the relay-station-type intermediate station over the base-station-type intermediate station.

In addition, any combination of the above components, and any conversion of the expression of the present disclosure among methods, devices, systems, recording media, computer programs and the like are also encompassed within this disclosure.

According to the present disclosure, communication of an intermediate station that interconnects a base station and a communication device can be appropriately controlled.

### BRIEF DESCRIPTION OF THE DRAWINGS

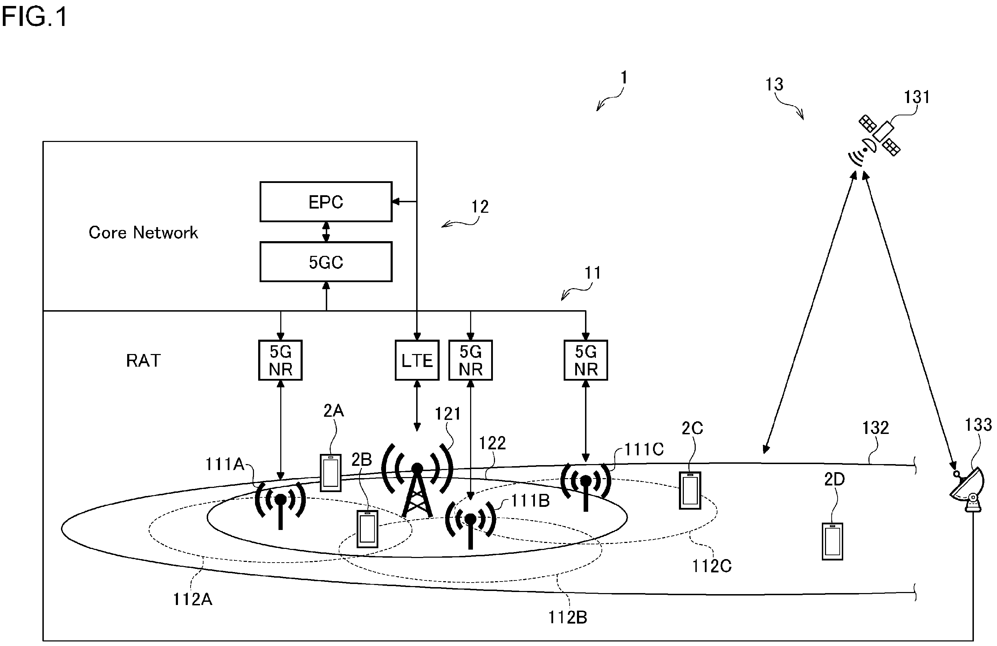

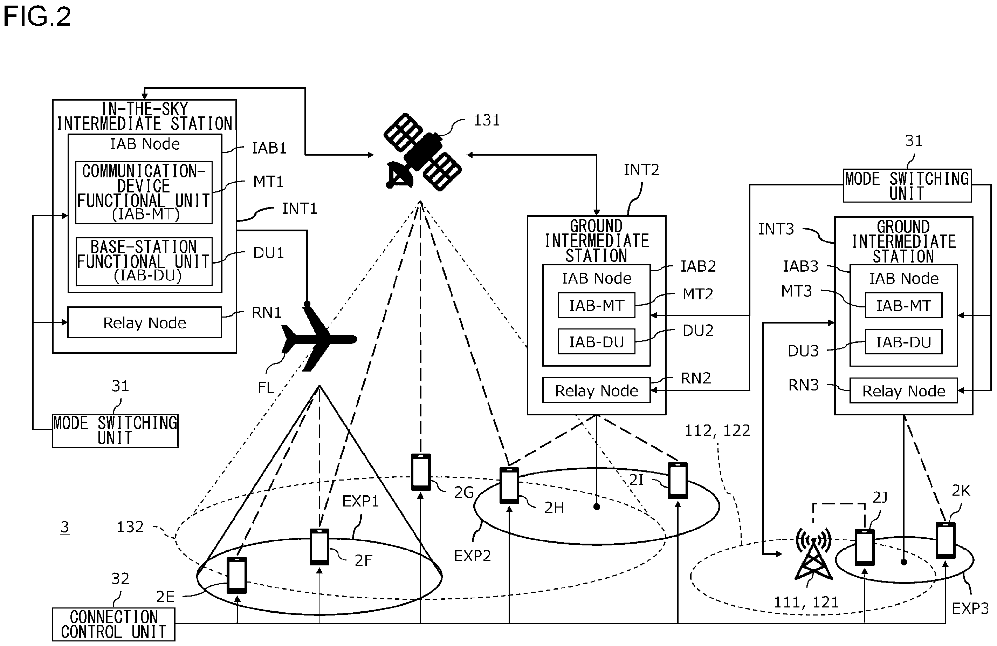

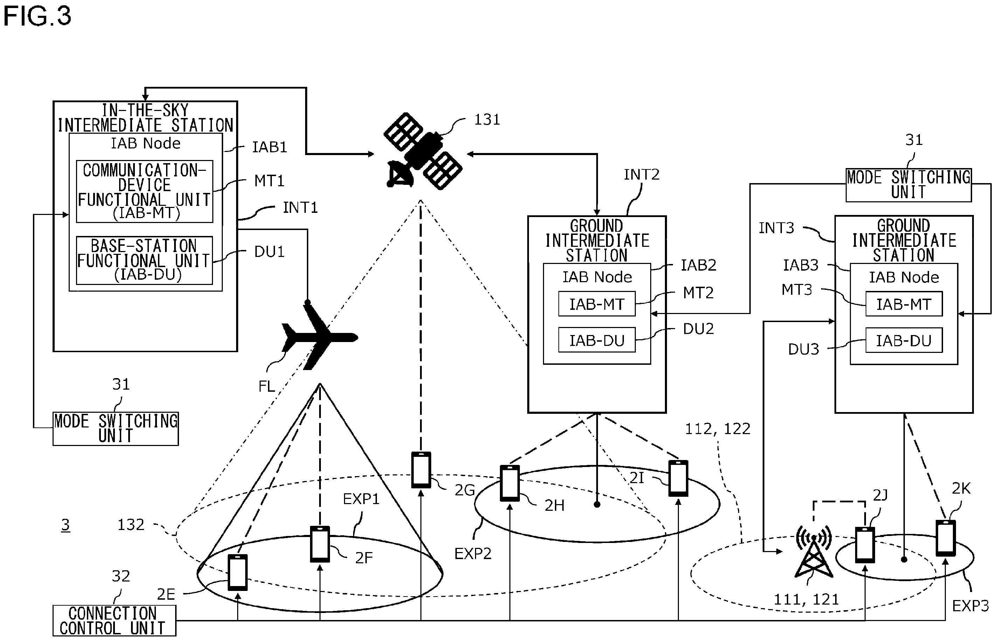

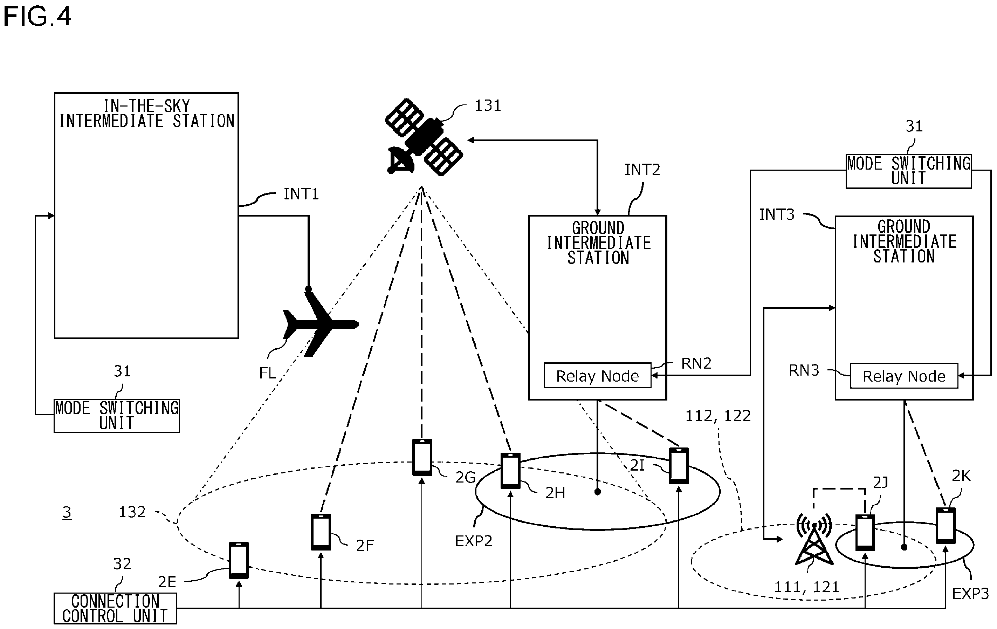

Figure 1 schematically shows the overview of a wireless communication system to which the communication control apparatus is applied. Figure 2 is a functional block diagram of the communication control apparatus. Figure 3 shows a schematic example of the connection state under normal situations. Figure 4 shows a schematic example of the connection state under emergent situations.

### DETAILED DESCRIPTION OF THE INVENTION

Figure 1 schematically shows an overview of a wireless communication system 1 to which the communication control apparatus according to an embodiment of the present disclosure is applied. The wireless communication system 1 includes 5G wireless communication system 11, 4G wireless communication system 12, and satellite communication system 13. 5G wireless communication system 11 that complies with the fifth generation mobile communication system (5G) uses NR (New Radio) or 5G NR (Fifth Generation New Radio) as the radio access technology (RAT) and 5GC (Fifth Generation Core) as the core network. 4G wireless communication system 12 that complies with the fourth generation mobile communication system (4G) uses LTE (Long Term Evolution) or LTE-Advanced as the radio access technology and EPC (Evolved Packet Core) as the core network. Satellite communication system 13 is for satellite communication via communication satellite 131. Although not shown in the figure, the wireless communication system 1 may include wireless communication networks of a generation prior to 4G, a generation later than 5G (e.g. 6G), or any wireless communication networks that are not associated with generations, such as Wi-Fi (registered trademark).

The 5G wireless communication system 11 may include a plurality of 5G base stations 111A, 111B, and 111C (hereinafter collectively referred to as 5G base station 111) installed on the ground capable of communicating by 5G NR with communication devices or communication devices 2A, 2B, 2C, and 2D (hereinafter collectively referred to as communication device(s) 2) such as smartphones, which are also referred to as UE (User Equipment). 5G base station 111 is also referred to as gNodeB (gNB). The coverage or support range of each 5G base station 111A, 111B and 111C is referred to as a cell 112A, 112B and 112C (hereinafter collectively referred to as 5G cell 112).

The size of the 5G cell 112 of each 5G base station 111 is arbitrary, but typically ranges from a few meters to several tens of kilometers in radius. Although there is no established definition, cells with a radius of a few meters to ten meters are called femtocells, cells with a radius of ten meters to several tens of meters are called picocells, cells with a radius of several tens of meters to several hundred meters are called microcells, and cells with a radius of more than several hundreds of meters are called macrocells. In 5G, high frequency radio waves such as millimeter waves are often used, and their high tendency to propagate in a straight-line causes radio waves to be blocked by obstacles, shortening the communication distance. For this reason, 5G tends to use more small cells than 4G and earlier generations.

The communication device 2 can conduct 5G communication when it is located within at least one of a plurality of 5G cells 112A, 112B and 112C. In the example shown in the figure, communication device 2B in 5G cells 112A and 112B can communicate with both 5G base stations 111A and 111B by 5G NR. In addition, the communication device 2C in the 5G cell 112C can communicate with the 5G base station 111C by 5G NR. Communication device 2A and 2D are outside of all 5G cells 112A, 112B and 112C, so they are not able to communicate by 5G NR. The 5G NR-based 5G communication between each communication device 2 and each 5G base station 111 is managed by the 5GC, which is the core network. For example, the 5GC transfers data to and from each 5G base station 111, transfers data to and from external networks such as the EPC, the satellite communication system 13 and the Internet, and manages the movement of the communication device 2.

The 4G wireless communication system 12 comprises a plurality of 4G base stations 121 (only one of them is shown in Figure 1) installed on the ground that can communicate with the communication device 2 by LTE or LTE-Advanced. The base station 121 in 4G is referred to as eNodeB (eNB). Similar to each 5G base station 111, the communication range or support range of each 4G base station 121 is also called a cell and is shown as 122.

The communication device 2 can conduct 4G communication when it is located within 4G cell 122. In the example shown in the figure, the communication devices 2A and 2B in the 4G cell 122 can communicate with the 4G base station 121 by LTE or LTE-Advanced. Communication device 2C and 2D are outside the 4G cell 122 and are not able to communicate by LTE or LTE-Advanced. The 4G communication by LTE and LTE-Advanced between each communication device 2 and each 4G base station 121 is managed by the EPC, which is the core network. For example, the EPC manages the transfer of data to and from each 4G base station 121, the transfer of data to and from external networks such as 5GC, the satellite communication system 13 and the Internet, and the movement management of the communication device 2.

If we take a look at each communication device 2A, 2B, 2C and 2D in the example shown in the figure, the communication device 2A is in a state that enables 4G communication with 4G base station 121, and communication device 2B is in a state that enables 5G communication with 5G base stations 111A and 111B and 4G communication with 4G base station 121, and communication device 2C is in a state that enables 5G communication with 5G base station 111C. When there are multiple base stations (111A, 111B and 121) as in the case of communication device 2B, one base station is selected as the most suitable for the communication device 2B in terms of communication quality etc., under the control of the 5GC and/or the EPC, which is the core network. For the communication device 2D that is not in a state that enables 5G communication with any 5G base station 111 or 4G communication with any 4G base station 121, the communication is conducted using the satellite communication system 13 described below.

The satellite communication system 13 is the wireless communication system using communication satellites 131 as non-terrestrial base stations. The communication satellites 131 are low-earth-orbit satellites flying in low-earth-orbit outer space of 500 to 700 km above the ground. Similar to 5G base station 111 and 4G base station 121, the communication range or support range of each communication satellite 131 is also called a cell and is shown as 132. Thus, a communication satellite 131 as a non-terrestrial base station provides a satellite communication cell 132 as a non-terrestrial communication cell onto the ground. Communication device 2 on the ground can conduct satellite communication when it is inside the satellite communication cell 132. Similar to 5G base station 111 in the 5G wireless communication system 11 and 4G base station 121 in the 4G wireless communication system 12, communication satellite 131 as the base station in the satellite communication system 13 is capable of wireless communication directly or indirectly via aircraft etc. with the communication device 2 within the satellite communication cell 132. The radio access technology used by the communication satellite 131 for wireless communication with the communication device 2 in the satellite communication cell 132 may be 5G NR, the same as the 5G base station 111, or LTE or LTE-Advanced, the same as the 4G base station 121, or any other radio access technology that the communication device 2 can use. Therefore, there is no need for the communication device 2 to have any special functions or components for satellite communication.

The satellite communication system 13 is equipped with a gateway 133 as a ground station that is installed on the ground and can communicate with the communication satellite 131. The gateway 133 is equipped with a satellite antenna to communicate with the communication satellite 131, and is connected to the 5G base station 111 and the 4G base station 121 as terrestrial base stations that constitute the terrestrial network (TN). In this way, the gateway 133 connects the non-terrestrial network (NTN), which is comprising communication satellites 131 as a non-terrestrial base station or a satellite base station, and the terrestrial network TN, which is comprising terrestrial base stations 111 and 121, for mutual communication. When the communication satellite 131 conducts 5G communication with the communication device 2 in the satellite communication cell 132 by 5G NR, the 5GC connected via the gateway 133 and the 5G base station 111 in the TN (or the 5G radio access network) is used as the core network. When the communication satellite 131 conducts 4G communication with the communication device 2 in the satellite communication cell 132 by LTE or LTE-Advanced, the EPC connected via the gateway 133 and the 4G base station 121 in the TN (or the 4G radio access network) is used as the core network. In this way, appropriate coordination is made between different wireless communication systems such as 5G wireless communication system 11, 4G wireless communication system 12, satellite communication system 13 etc. through the gateway 133.

Satellite communication by communication satellites 131 is mainly used for covering areas with no or few terrestrial base stations such as 5G base stations 111 and 4G base stations 121 etc. In the example shown in the figure, a communication device 2D that is outside the communication cells of all the terrestrial base stations communicates with the communication satellite 131. On the other hand, communication devices 2A, 2B and 2C that are in good communication with either of the terrestrial base stations, are also in the satellite communication cell 132 and can communicate with the communication satellite 131. However, by communicating with the terrestrial base stations instead of the communication satellite 131 as the satellite base station in principle, the limited communication resources (including power) of the communication satellite 131 are saved for the communication device 2D etc. The communication satellite 131 uses beamforming to direct the communication signal to the communication device 2D in the satellite communication cell 132, thereby the communication quality with the communication device 2D is improved.

The size of the satellite communication cell 132 of the communication satellite 131 as a satellite base station depends on the number of beams emitted by the communication satellite 131. For example, a satellite communication cell 132 with a diameter of about 24 km can be formed by combining up to 2,800 beams. As illustrated, a satellite communication cell 132 is typically larger than a terrestrial communication cell such as a 5G cell 112 or a 4G cell 122, and could contain one or more 5G cells 112 and/or 4G cells 122 inside it. The above example shows a communication satellite 131 flying in low-earth-orbit outer space at a height of about 500 km to 700 km above the ground as a flying non-terrestrial base station. However, a communication satellite flying in geostationary orbit or other higher orbit in outer space, or an unmanned or manned aircraft flying in stratosphere or other lower (e.g. about 20 km above the ground) atmosphere may be used as a non-terrestrial base station in addition to or instead of the communication satellite 131.

As shown in Figure 1, the wireless communication system 1 is usually constructed by the terrestrial communication cells 112, 122 provided by terrestrial base stations 111, 121 stationarily installed on the ground. However, mobile communication cannot be performed outside terrestrial communication cells 112, 122, and the quality of mobile communications might be low depending on time and/or place even within terrestrial communication cells 112, 122. Although the wireless communication system 1 can also include the satellite communication system 13 that uses the communication satellite 131 as a non-terrestrial base station, it is impractical to supplement the terrestrial network of terrestrial base stations 111, 121 solely by the communication satellites 131.

To solve these problems, an intermediate station such as relay station may be used, which can communicate with the terrestrial base stations 111, 121 and/or the communication satellite 131 to expand the terrestrial communication cells 112, 122 and/or the satellite communication cell 132. A communication device 2 in the vicinity of an intermediate station can communicate indirectly with the terrestrial base stations 111, 121 and/or the communication satellite 131 via the intermediate station, even if it cannot communicate directly with the terrestrial base stations 111, 121 and/or the communication satellite 131.

As a result of the independent investigation, the inventor has come to recognize that intermediate stations can be used in a variety of ways. For example, the functions required of intermediate stations for the terrestrial base station 111, 121 and for the non-terrestrial base station such as the communication satellite 131, may differ depending on usage and/or situation. In addition, various types of intermediate stations may be provided, such as intermediate stations that are fixed on the ground, intermediate stations that can move on the ground, and intermediate stations that can fly in the sky. The purpose of the present embodiment is to provide a communication control apparatus 3 that can appropriately control communication of various intermediate stations that interconnects various base stations 111, 121, 131 and the communication devices 2.

Figure 2 is a functional block diagram of the communication control apparatus 3 of the present embodiment. The communication control apparatus 3 comprises a mode switching unit 31 and/or a connection control unit 32. These functional blocks are realized by the cooperation of hardware resources, such as the central processing unit, memory, input devices, output devices, and peripheral devices connected to the computer, and software that is executed using them. Regardless of the type of computer or its installation location, each of the above functional blocks may be realized with the hardware resources of a single computer, or by combining hardware resources distributed across multiple computers. Especially in this embodiment, some or all of functional blocks of the communication control apparatus 3 may be realized in a distributed or centralized manner by computer and/or processor provided in the intermediate stations INT1 to INT3 described later, the aircraft FL described later, the communication device 2, the terrestrial base stations 111, 121, the communication satellite 131, the gateway 133, and the core network CN.

Figure 2 shows three types of intermediate stations INT1 to INT3 (hereinafter also collectively referred to as intermediate station INT) and seven types of communication devices 2E to 2K (hereinafter also collectively referred to as communication device 2). The intermediate station INT interconnects the terrestrial base stations 111, 121 and/or the non-terrestrial base station 131 and the communication device 2. The first intermediate station INT1 in the example in Figure 2 is an in-the-sky intermediate station installed in a flying object such as an aircraft FL flying below the communication satellite 131. This in-the-sky intermediate station INT1 can interconnect the communication satellite 131 and the communication device 2 (the communication devices 2E, 2F in the example of Figure 2). The second intermediate station INT2 in the example in Figure 2 is a ground intermediate station located on the ground. This ground intermediate station INT2 can interconnect the communication satellite 131 and the communication device 2 (the communication devices 2H, 2I in the example of Figure 2). The third intermediate station INT3 in the example in Figure 2 is a ground intermediate station located on the ground. This ground intermediate station INT3 can interconnect the terrestrial base stations 111, 121 and the communication device 2 (the communication devices 2J, 2K in the example of Figure 2).

Each intermediate station INT is equipped with at least one of a function as a base-station node IAB1 to IAB3 (hereinafter also collectively referred to as base-station node IAB) and a function as a relay-station node RN1 to RN3 (hereinafter also referred to as relay-station node RN). In case the intermediate station INT is equipped with both functions of a base-station node IAB and a relay-station node RN, the mode switching unit 31 described below can switch the intermediate station INT between a base-station mode in which the intermediate station INT functions as a base-station node IAB and a relay-station mode in which the intermediate station INT functions as a relay-station node RN. Besides, regardless of the functions provided by the intermediate station INT, the intermediate station INT and/or the base stations 111, 121, 131 are determined or recommended for the communication device 2 to be connected by the connection control unit 32 described below. Although both the mode switching unit 31 and the connection control unit 32 are shown for convenience in Figure 2, the communication control apparatus 3 according to the present disclosure may comprise at least one of the mode switching unit 31 and the connection control unit 32.

IAB (Integrated Access and Backhaul) is a technology specified in 5G to expand a communication cell of a parent node, utilizing wireless backhaul between a base station 111, 121, 131 that serves as an IAB donor (parent node) and a base-station node IAB (child node) and/or between parent and child base-station nodes IAB (where a base-station node IAB closer to the IAB donor is the parent node, and a base-station node IAB far from the IAB donor is the child node).

Here, "expansion of a communication cell" includes not only expanding the area covered by an existing communication cell, but also improving the communication quality of at least part of an existing communication cell. In particular, the in-the-sky intermediate station INT1 and the ground intermediate station INT2, whose parent nodes are non-terrestrial base stations such as the communication satellites 131 with a large distance from the communication device 2, function as base stations closer to the communication device 2 (the communication devices 2E, 2F, 2H, 2I in the example in Figure 2) than such non-terrestrial base stations. This can significantly shorten the communication delay between these intermediate stations INT1, INT2 and the communication device 2. Furthermore, "expansion of the area covered by a communication cell" includes not only expanding the area in the horizontal plane of an existing communication cell, but also expanding an existing communication cell vertically, e.g. underground or to the upper and/or lower floors of a building.

It should be noted that a typically small base station (e.g. providing a femtocell with a radius of a few meters to ten meters) connected to the base station 111, 121, 131 and/or the gateways 133 through wired or wireless backhaul, may be used in addition to or instead of base-station node or IAB node. In other words, the following description of base-station node or IAB node is similarly applicable to such small base station.

Each base-station node IAB1 to IAB3 in Figure 2 comprises a communication-device functional unit MT1 to MT3 (hereinafter also collectively referred to as communication-device functional unit MT) that functions as a communication device for the parent node including terrestrial base stations 111, 121 and/or the non-terrestrial base station 131 etc. and a base-station functional unit DU1 to DU3 (hereinafter also collectively referred to as base-station functional unit DU) that functions as a base station for the communication device 2 with which each of the base-station nodes IAB1 to IAB3 can communicate. In 5G, the communication-device functional unit MT is specified as a MT (Mobile Termination) or IAB-MT, and the base-station functional unit DU is specified as a DU (Distributed Unit) or IAB-DU. It should be noted that, in other wireless communication systems including generations after 5G, functions similar to IAB, MT, DU, CU (Central Unit on the core network side that is paired with the DU) may be provided under different names, but such similar functions may be used as IAB, MT, DU, CU in the present embodiment.

Each relay-station node RN1 to RN3 in Figure 2 function as a relay station such as a repeater that relays communication signal between the terrestrial base station 111, 121 and/or the non-terrestrial base station 131 and the communication device 2 to expand the terrestrial communication cell 112, 122 and/or the non-terrestrial communication cell 132. Unlike the aforementioned base-station node IAB, the relay-station node RN is not equipped with a base-station functional unit DU, therefore the benefit of shortening the communication delay with the communication device 2 is not provided. In other words, even when the communication device 2 communicates with the base station 111, 121, 131 via the relay-station node RN, the relatively large communication delay between the communication device 2 and base station 111, 121, 131 needs to be considered on the core network side. On the other hand, when the communication device 2 communicates with the base station 111, 121, 131 via the base-station node IAB, the relatively small communication delay between the communication device 2 and the base-station node IAB (the base-station functional unit DU) may be considered on the core network side.

As described above, the base-station node IAB provides not only a basic function of expanding the communication cell 112, 122, 132 but also an additional function of shortening the communication delay with the communication device 2. On the other hand, the relay-station node RN substantially provides only a basic function of expanding the communication cell 112, 122, 132. Considering such differences in functions, applications, objectives etc. of the base-station node IAB and the relay station node RN, the communication control apparatus 3 in the present embodiment appropriately controls communication between the base station 111, 121, 131 and the communication device 2 by means of the mode switching unit 31 and/or the connection control unit 32. The mode switching unit 31 and/or the connection control unit 32 may be configured by artificial intelligence etc. having machine learning capability, or they may be configured by the NWDAF (Network Data Analytics Function) etc. responsible for collecting and analyzing data on the network in the 5GC (the core network of 5G).

The mode switching unit 31 switches the intermediate station INT between a base-station mode in which the intermediate station INT functions as a base station to the communication device 2 and a relay-station mode in which the intermediate station INT relays communication signal between the base station 111, 121, 131 and the communication device 2. The intermediate station INT switched to the base-station mode by the mode switching unit 31 functions as a base-station node IAB, and the intermediate station INT switched to the relay-station mode by the mode switching unit 31 functions as a relay-station node RN. The mode switching unit 31 may allow one intermediate station INT to operate simultaneously in different modes for a plurality of the communication devices 2. The base-station mode may include a plurality of sub-modes corresponding to the communication resources to be operated in the intermediate station INT. The plurality of sub-modes may specify various communication resources such as frequency bands, communication functions, hardware, software, antennas, power etc. that are available for the base-station node IAB. Besides, the plurality of sub-modes may include a sleep mode in which the intermediate station INT (i.e. the base-station node IAB) in the base-station mode sleeps or stops. It should be noted that an intermediate station INT equipped with only one of the functions of the base-station node IAB and the relay-station node RN, is not subject of the switching process between the base-station mode and the relay-station mode by the mode switching unit 31.

The communication device 2E in Figure 2 is located inside the expansion cell EXP1 generated by expanding the satellite communication cell 132 by the in-the-sky intermediate station INT1, and outside the satellite communication cell 132 before the expansion. Since the communication device 2E outside the satellite communication cell 132 cannot directly communicate with the communication satellite 131, it communicates indirectly with the communication satellite 131 via the in-the-sky intermediate station INT1.

In case the in-the-sky intermediate station INT1 is switched to the base-station mode by the mode switching unit 31, the base-station node IAB1 can communicate with the communication device 2E. In this case, the relatively small communication delay between the communication device 2E and the base-station node IAB1 (the base-station functional unit DU1) and/or the aircraft FL is considered for the communication control in the core network (not shown in Figure 2) of the satellite communication system 13 including the communication satellite 131. On the other hand, in case the in-the-sky intermediate station INT1 is switched to the relay-station mode by the mode switching unit 31, the relay-station node RN1 can communicate with the communication device 2E. In this case, the relatively large communication delay between the communication device 2E and the communication satellite 131 is considered for the communication control in the core network of the satellite communication system 13 including the communication satellite 131.

As described above, in order to shorten the delay in communication of the communication device 2E for efficient communication control, the mode switching unit 31 preferably switches the in-the-sky intermediate station INT1 to the base-station mode. However, since more communication resources are used in the base-station mode than in the relay-station mode at the in-the-sky intermediate station INT1 and/or the communication satellite 131, it is preferable for the mode switching unit 31 to switch the in-the-sky intermediate station INT1 to the relay-station mode, if these communication resources are to be saved and/or if the delay in communication of the communication device 2E is acceptable. Furthermore, the mode switching unit 31 may switch the in-the-sky intermediate station INT1 (the base-station node IAB1) in the base-station mode to appropriate sub-mode according to the communication volume, required communication quality etc. Besides, if securing overall communication capability through the communication satellites 131 etc. and/or expanding the communication cell (communication area) by the relay-station node RN1 should be prioritized over the improvement of local communication quality through the base-station node IAB1 in emergent situations etc. such as disasters, the mode switching unit 31 may switch the in-the-sky intermediate station INT1 (the base-station node IAB1) to the sleep mode or the relay-station mode (the relay-station node RN1).

The communication device 2F in Figure 2 is located inside the overlapping area of the expansion cell EXP1 generated by expanding the satellite communication cell 132 by the in-the-sky intermediate station INT1 and the satellite communication cell 132 before the expansion. The communication device 2F inside the satellite communication cell 132 may communicate directly with the communication satellite 131, or indirectly with the communication satellite 131 via the in-the-sky intermediate station INT1.

In case the in-the-sky intermediate station INT1 is switched to the base-station mode by the mode switching unit 31, the base-station node IAB1 can communicate with the communication device 2F. In this case, the relatively small communication delay between the communication device 2F and the base-station node IAB1 (the base-station functional unit DU1) and/or the aircraft FL is considered for the communication control in the core network of the satellite communication system 13 including the communication satellite 131. On the other hand, in case the in-the-sky intermediate station INT1 is switched to the relay-station mode by the mode switching unit 31, the relay-station node RN1 can communicate with the communication device 2F. In this case, the relatively large communication delay between the communication device 2F and the communication satellite 131 is considered for the communication control in the core network of the satellite communication system 13 including the communication satellite 131. This communication delay is substantially equal to the case where the communication device 2F communicates directly with the communication satellite 131. Therefore, for the communication device 2F inside the satellite communication cell 132, there is no particular benefit to communicate with the in-the-sky intermediate station INT1 (the relay-station node RN1) in the relay-station mode.

As described above, in order to shorten the delay in communication of the communication device 2F for efficient communication control, the mode switching unit 31 preferably switches the in-the-sky intermediate station INT1 to the base-station mode. However, since more communication resources are used in the base-station mode than in the relay-station mode at the in-the-sky intermediate station INT1 and/or the communication satellite 131, it is preferable for the mode switching unit 31 to switch the in-the-sky intermediate station INT1 to the relay-station mode (or the sleep mode to stop the in-the-sky intermediate station INT1, causing the communication device 2F to connect directly with the communication satellite 131), if these communication resources are to be saved and/or if the delay in communication of the communication device 2F is acceptable. Furthermore, the mode switching unit 31 may switch the in-the-sky intermediate station INT1 (the base-station node IAB1) in the base-station mode to appropriate sub-mode according to the communication volume, required communication quality etc. Besides, if securing overall communication capability through the communication satellites 131 etc. and/or expanding the communication cell (communication area) by the relay-station node RN1 should be prioritized over the improvement of local communication quality through the base-station node IAB1 in emergent situations etc. such as disasters, the mode switching unit 31 may switch the in-the-sky intermediate station INT1 (the base-station node IAB1) to the sleep mode or the relay-station mode (the relay-station node RN1).

The communication device 2G in Figure 2 is located outside the expansion cells EXP1 to EXP3 generated by expanding the communication cells 112, 122, 132 by the intermediate stations INT1 to INT3 and inside the satellite communication cell 132. The communication device 2G inside the satellite communication cell 132 directly communicates with the communication satellite 131.

The communication device 2H in Figure 2 is located inside the overlapping area of the expansion cell EXP2 generated by expanding the satellite communication cell 132 by the ground intermediate station INT2 and the satellite communication cell 132 before the expansion. The communication device 2H inside the satellite communication cell 132 may communicate directly with the communication satellite 131, or indirectly with the communication satellite 131 via the ground intermediate station INT2.

In case the ground intermediate station INT2 is switched to the base-station mode by the mode switching unit 31, the base-station node IAB2 can communicate with the communication device 2H. In this case, the relatively small communication delay between the communication device 2H and the base-station node IAB2 (the base-station functional unit DU2) is considered for the communication control in the core network of the satellite communication system 13 including the communication satellite 131. On the other hand, in case the ground intermediate station INT2 is switched to the relay-station mode by the mode switching unit 31, the relay-station node RN2 can communicate with the communication device 2H. In this case, the relatively large communication delay between the communication device 2H and the communication satellite 131 is considered for the communication control in the core network of the satellite communication system 13 including the communication satellite 131. This communication delay is substantially equal to the case where the communication device 2H communicates directly with the communication satellite 131. Therefore, for the communication device 2H inside the satellite communication cell 132, there is no particular benefit to communicate with the ground intermediate station INT2 (the relay-station node RN2) in the relay-station mode.

As described above, in order to shorten the delay in communication of the communication device 2H for efficient communication control, the mode switching unit 31 preferably switches the ground intermediate station INT2 to the base-station mode. However, since more communication resources are used in the base-station mode than in the relay-station mode at the ground intermediate station INT2 and/or the communication satellite 131, it is preferable for the mode switching unit 31 to switch the ground intermediate station INT2 to the relay-station mode (or the sleep mode to stop the ground intermediate station INT2, causing the communication device 2H to connect directly with the communication satellite 131), if these communication resources are to be saved and/or if the delay in communication of the communication device 2H is acceptable. Furthermore, the mode switching unit 31 may switch the ground intermediate station INT2 (the base-station node IAB2) in the base-station mode to appropriate sub-mode according to the communication volume, required communication quality etc. Besides, if securing overall communication capability through the communication satellites 131 etc. and/or expanding the communication cell (communication area) by the relay-station node RN2 should be prioritized over the improvement of local communication quality through the base-station node IAB2 in emergent situations etc. such as disasters, the mode switching unit 31 may switch the ground intermediate station INT2 (the base-station node IAB2) to the sleep mode or the relay-station mode (the relay-station node RN2).

The communication device 2I in Figure 2 is located inside the expansion cell EXP2 generated by expanding the satellite communication cell 132 by the ground intermediate station INT2, and outside the satellite communication cell 132 before the expansion. Since the communication device 2I outside the satellite communication cell 132 cannot directly communicate with the communication satellite 131, it communicates indirectly with the communication satellite 131 via the ground intermediate station INT2.

In case the ground intermediate station INT2 is switched to the base-station mode by the mode switching unit 31, the base-station node IAB2 can communicate with the communication device 2I. In this case, the relatively small communication delay between the communication device 2I and the base-station node IAB2 (the base-station functional unit DU2) is considered for the communication control in the core network of the satellite communication system 13 including the communication satellite 131. On the other hand, in case the ground intermediate station INT2 is switched to the relay-station mode by the mode switching unit 31, the relay-station node RN2 can communicate with the communication device 2I. In this case, the relatively large communication delay between the communication device 2I and the communication satellite 131 is considered for the communication control in the core network of the satellite communication system 13 including the communication satellite 131.

As described above, in order to shorten the delay in communication of the communication device 2I for efficient communication control, the mode switching unit 31 preferably switches the ground intermediate station INT2 to the base-station mode. However, since more communication resources are used in the base-station mode than in the relay-station mode at the ground intermediate station INT2 and/or the communication satellite 131, it is preferable for the mode switching unit 31 to switch the ground intermediate station INT2 to the relay-station mode, if these communication resources are to be saved and/or if the delay in communication of the communication device 2I is acceptable. Furthermore, the mode switching unit 31 may switch the ground intermediate station INT2 (the base-station node IAB2) in the base-station mode to appropriate sub-mode according to the communication volume, required communication quality etc. Besides, if securing overall communication capability through the communication satellites 131 etc. and/or expanding the communication cell (communication area) by the relay-station node RN2 should be prioritized over the improvement of local communication quality through the base-station node IAB2 in emergent situations etc. such as disasters, the mode switching unit 31 may switch the ground intermediate station INT2 (the base-station node IAB2) to the sleep mode or the relay-station mode (the relay-station node RN2).

The communication device 2J in Figure 2 is located inside the overlapping area of the expansion cell EXP3 generated by expanding the terrestrial communication cell 112, 122 by the ground intermediate station INT3 and the terrestrial communication cell 112, 122 before the expansion. The communication device 2J inside the terrestrial communication cell 112, 122 may communicate directly with the terrestrial base station 111, 121, or indirectly with the terrestrial base station 111, 121 via the ground intermediate station INT3. However, unlike the non-terrestrial base station such as the communication satellite 131, the terrestrial base station 111, 121 is located near the communication device 2J. Therefore, the benefit of shortening the communication delay by the ground intermediate station INT3 is not expected to be significant, meaning that there is little benefit to cause the communication device 2J located on the ground to connect to the ground intermediate station INT3 instead of the terrestrial base station 111, 121. Therefore, in principle, the communication device 2J inside the terrestrial communication cell 112, 122 communicates directly with the terrestrial base station 111, 121.

The communication device 2K in Figure 2 is located inside the expansion cell EXP3 generated by expanding the terrestrial communication cell 112, 122 by the ground intermediate station INT3, and outside the terrestrial communication cell 112, 122 before the expansion. Since the communication device 2K outside the terrestrial communication cell 112, 122 cannot directly communicate with the terrestrial base station 111, 121, it communicates indirectly with the terrestrial base station 111, 121 via the ground intermediate station INT3.

In case the ground intermediate station INT3 is switched to the base-station mode by the mode switching unit 31, the base-station node IAB3 can communicate with the communication device 2K. In this case, the relatively small communication delay between the communication device 2K and the base-station node IAB3 (the base-station functional unit DU3) is considered for the communication control in the core network of the terrestrial communication system 11, 12 including the terrestrial base station 111, 121. On the other hand, in case the ground intermediate station INT3 is switched to the relay-station mode by the mode switching unit 31, the relay-station node RN3 can communicate with the communication device 2K. In this case, the relatively large communication delay between the communication device 2K and the terrestrial base station 111, 121 is considered for the communication control in the core network of the terrestrial communication system 11, 12 including the terrestrial base station 111, 121. However, unlike the non-terrestrial base station such as the communication satellite 131, the terrestrial base station 111, 121 is located near the communication device 2K. Therefore, the benefit of shortening the communication delay by the ground intermediate station INT3 is not so significant as the in-the-sky intermediate station INT1 and the ground intermediate station INT2.

As described above, in order to shorten the delay in communication of the communication device 2K for efficient communication control, the mode switching unit 31 preferably switches the ground intermediate station INT3 to the base-station mode. However, since more communication resources are used in the base-station mode than in the relay-station mode at the ground intermediate station INT3 and/or the terrestrial base station 111, 121, it is preferable for the mode switching unit 31 to switch the ground intermediate station INT3 to the relay-station mode, if these communication resources are to be saved and/or if the delay in communication of the communication device 2K is acceptable. Furthermore, the mode switching unit 31 may switch the ground intermediate station INT3 (the base-station node IAB3) in the base-station mode to appropriate sub-mode according to the communication volume, required communication quality etc. Besides, if securing overall communication capability through the terrestrial base stations 111, 121 etc. and/or expanding the communication cell (communication area) by the relay-station node RN3 should be prioritized over the improvement of local communication quality through the base-station node IAB3 in emergent situations etc. such as disasters, the mode switching unit 31 may switch the ground intermediate station INT3 (the base-station node IAB3) to the sleep mode or the relay-station mode (the relay-station node RN3).

Regardless of the functions (the base-station node IAB and/or the relay-station node RN) provided by the intermediate station INT, the connection control unit 32 determines or recommends the intermediate station INT and/or the base stations 111, 121, 131 to be connected by the communication device 2. Such priority connection control of the communication device 2 can be realized by known procedures, controls and processes such as the handover with frequency switching, the redirection, the priority control causing the communication device 2 to preferentially wait for a specific frequency or a specific frequency band, the Access Class Barring, the timer notification from the NAS (Non-Access Stratum), the notification of the Forbidden TA (forbidden tracking area), the notification of Forbidden Cell etc.

The connection control unit 32 may cause a base-station-type intermediate station INT (the base-station node IAB) that interconnects a base station 111, 121, 131 and a communication device 2 and functions as a base station to the communication device 2, to connect with the communication device 2 preferentially to a relay-station-type intermediate station INT (the relay-station node RN) that relays communication signal of the base station 111, 121, 131. Besides, the connection control unit 32 may cause a relay-station-type intermediate station INT (the relay-station node RN) that interconnects a base station 111, 121, 131 and a communication device 2 and relays communication signal of the base station 111, 121, 131, to connect with the communication device 2 preferentially to a base-station-type intermediate station INT (the base-station node IAB) that functions as a base station to the communication device 2.

Furthermore, the connection control unit 32 preferably switches between a base-station priority mode in which the communication device 2 is preferentially connected to the base-station-type intermediate station over the relay-station-type intermediate station, and a relay-station priority mode in which the communication device 2 is preferentially connected to the relay-station-type intermediate station over the base-station-type intermediate station. It should be noted that the connection control unit 32 in the relay-station priority mode preferably connects the communication device 2 (the communication devices 2F, 2H, 2J in the example of Figure 2) inside the communication cell 112, 122, 132 that can communicate directly with the base station 111, 121, 131, preferentially with such base station 111, 121, 131, since there is little benefit for the relay-station-type intermediate station (the relay-station node RN) to intervene as described above.

The connection control unit 32 may apply the base-station priority mode or the relay-station priority mode individually to each of the communication devices 2 according to the type, the application, the location, the communication mode etc. of each communication device 2. For example, the base-station priority mode may be preferentially applied by the connection control unit 32, to general-purpose communication devices 2 such as smartphones that require "high speed and high capacity" (eMBB: Enhanced Mobile Broadband) and/or "high reliability and low latency" (URLLC: Ultra Reliable Low Latency Communications) in 5G, and/or communication devices 2 performing priority communications requiring high quality such as emergency calls. Besides, the relay-station priority mode may be preferentially applied by the connection control unit 32, to communication devices 2 whose communication delays are acceptable such as IoT devices used for "many simultaneous connections" (mMTC: Massive Machine Type Communications) in 5G.

The connection control unit 32 may switch the mode applied to each communication device 2 according to the situation of the wireless communication system 1 and/or the time of day.

For example, during usual times, the base-station priority mode is preferentially applied to the communication device 2 (the communication devices 2E, 2F, 2H, 2I, 2K in the example of Figure 2) that can enjoy the benefit of shortening the communication delay by the base-station node IAB. In this case, as shown schematically and exemplarily in Figure 3, all or some intermediate stations INT1 to INT3 are switched to the base-station mode (the base-station nodes IAB1 to IAB3) by the mode switching unit 31 (the disabled relay-station nodes RN1 to RN3 are omitted in Figure 3). The communication devices 2E, 2F inside the expansion cell EXP1 with base-station priority mode applied, are connected to the communication satellite 131 via the base-station node IAB1 in the in-the-sky intermediate station INT1. The communication devices 2H, 2I inside the expansion cell EXP2 with base-station priority mode applied, are connected to the communication satellite 131 via the base-station node IAB2 in the ground intermediate station INT2. The communication device 2K inside the expansion cell EXP3 with base-station priority mode applied, is connected to the terrestrial base station 111, 121 via the base-station node IAB3 in the ground intermediate station INT3.

On the other hand, during unusual times such as disasters, the relay-station priority mode is preferentially applied to the communication device 2, since securing overall communication capability through the base station 111, 121, 131 and/or expanding the communication cell 112, 122, 132 by the relay-station node RN should be prioritized over the improvement of local communication quality through the base-station node IAB. In this case, as shown schematically and exemplarily in Figure 4, all or some intermediate stations INT1 to INT3 are switched to the relay-station mode (the relay-station nodes RN1 to RN3) by the mode switching unit 31 (the disabled base-station nodes IAB1 to IAB3 are omitted in Figure 3). In particular, in-the-sky intermediate station INT1 in the example shown in Figure 4 is switched to the sleep mode by the mode switching unit 31, where not only the base-station node IAB1 but also the relay-station node RN1 are disabled or stopped. Therefore, the expansion cell EXP1 is also not generated.

In this case, the communication device 2E outside the satellite communication cell 132 is unable to communicate due to an emergency. To avoid this, the mode switching unit 31 may switch the in-the-sky intermediate station INT1 to the relay-station mode (the relay-station node RN1). The communication device 2F connected to the in-the-sky intermediate station INT1 (the base-station node IAB1) during usual times in Figure 3, now communicates directly with the communication satellite 131, since the expansion cell EXP1 is not generated by the in-the-sky intermediate station INT1. Among the communication devices 2H, 2I inside the expansion cell EXP2 with the relay-station priority mode applied, the communication device 2I outside the satellite communication cell 132 is connected to the communication satellite 131 via the relay-station node RN2 in the ground intermediate station INT2. On the other hand, the communication device 2H inside the satellite communication cell 132 communicates directly with the communication satellite 131, since there is little benefit for the relay-station node RN2 to intervene. The communication device 2K inside the expansion cell EXP3 with the relay-station priority mode applied, is connected to the terrestrial base station 111, 121 via the relay-station node RN3 in the ground intermediate station INT3. Even when the relay-station priority mode is generally applied as described above, the connection control unit 32 preferably connects the communication device 2 (the communication devices 2F, 2H, 2J in the example of Figure 2) inside the communication cell 112, 122, 132 that can communicate directly with the base station 111, 121, 131, preferentially with such base station 111, 121, 131 without the relay-station node RN.

According to the present embodiment, communication between the base station 111, 121, 131 and the communication device 2 can be appropriately controlled, by the mode switching unit 31 switching the intermediate station INT between the base-station mode and the relay-station mode, and/or by the connection control unit 32 switching between the base-station priority mode and the relay-station priority mode.

The present disclosure has been described above based on embodiments. It is obvious to those skilled in the art that various variations are possible in the combination of each component and/or each process in the exemplary embodiments, and that such variations are also encompassed within the scope of the present disclosure.

It should be noted that the structures, the operations, and the functions of each apparatus and/or each method described in the embodiments can be realized by hardware resources or software resources, or by the cooperation of hardware resources and software resources. As hardware resources, for example, processors, ROMs, RAMs and various integrated circuits can be used. As software resources, for example, programs such as operating systems and applications can be used.

The present disclosure may be expressed as the following items.

1. A communication control apparatus comprising at least one processor that performs, by a mode switching unit, switching an intermediate station that interconnects a base station and a communication device between a base-station mode in which the intermediate station functions as a base station to the communication device and a relay-station mode in which the intermediate station relays communication signal between the base station and the communication device.
2. The communication control apparatus according to item 1, wherein the intermediate station in the base-station mode comprises a communication-device functional unit that functions as a communication device to the base station and a base-station functional unit that functions as a base station to the communication device.
3. The communication control apparatus according to item 2, wherein
   the intermediate station in the base-station mode is an IAB (Integrated Access and Backhaul) node,
   the communication-device functional unit is a MT (Mobile Termination), and
   the base-station functional unit is a DU (Distributed Unit).
4. The communication control apparatus according to any of items 1 to 3, wherein the base-station mode includes a plurality of sub-modes corresponding to the communication resources to be operated in the intermediate station.
5. The communication control apparatus according to item 4,
   wherein the plurality of sub-modes includes a sleep mode in which the intermediate station in the base-station mode sleeps.
6. The communication control apparatus according to any of items 1 to 5, wherein the base station is a flying non-terrestrial base station.
7. The communication control apparatus according to item 6, wherein the non-terrestrial base station is a communication satellite flying in outer space.
8. The communication control apparatus according to item 6 or 7, wherein the intermediate station flies below the non-terrestrial base station.
9. The communication control apparatus according to any of items 1 to 7, wherein the intermediate station is located on the ground.
10. A communication control apparatus comprising at least one processor that performs, by a connection control unit, causing a base-station-type intermediate station that interconnects a base station and a communication device and functions as a base station to the communication device, to connect with the communication device preferentially to a relay-station-type intermediate station that relays communication signal of the base station.
11. A communication control apparatus comprising at least one processor that performs, by a connection control unit, causing a relay-station-type intermediate station that interconnects a base station and a communication device and relays communication signal of the base station, to connect with the communication device preferentially to a base-station-type intermediate station that functions as a base station to the communication device.
12. The communication control apparatus according to item 10 or 11, wherein the connection control unit switches between a base-station priority mode in which the communication device is preferentially connected to the base-station-type intermediate station over the relay-station-type intermediate station, and a relay-station priority mode in which the communication device is preferentially connected to the relay-station-type intermediate station over the base-station-type intermediate station.
13. A communication control method comprising switching an intermediate station that interconnects a base station and a communication device between a base-station mode in which the intermediate station functions as a base station to the communication device and a relay-station mode in which the intermediate station relays communication signal between the base station and the communication device.
14. A communication control method comprising switching between a base-station priority mode in which a communication device is preferentially connected to a base-station-type intermediate station that interconnects a base station and the communication device and functions as a base station to the communication device, over a relay-station-type intermediate station that relays communication signal of the base station, and a relay-station priority mode in which the communication device is preferentially connected to the relay-station-type intermediate station over the base-station-type intermediate station.
15. A computer-readable medium storing a communication control program causing a computer to perform switching an intermediate station that interconnects a base station and a communication device between a base-station mode in which the intermediate station functions as a base station to the communication device and a relay-station mode in which the intermediate station relays communication signal between the base station and the communication device.
16. A computer-readable medium storing a communication control program causing a computer to perform switching between a base-station priority mode in which a communication device is preferentially connected to a base-station-type intermediate station that interconnects a base station and the communication device and functions as a base station to the communication device, over a relay-station-type intermediate station that relays communication signal of the base station, and a relay-station priority mode in which the communication device is preferentially connected to the relay-station-type intermediate station over the base-station-type intermediate station.

The present disclosure relates to communication control for intermediate station.

1 wireless communication system, 2 communication device, 3 communication control apparatus, 11 5G wireless communication system, 12 4G wireless communication system, 13 satellite communication system, 31 mode switching unit, 32 connection control unit, 111 5G base station, 112 5G cell, 121 4G base station, 122 4G cell, 131 communication satellite, 132 satellite communication cell, 133 gateway, DU base-station functional unit, EXP expansion cell, IAB base-station node, INT intermediate station, MT communication-device functional unit, RN relay-station node.

## Claims

1. A communication control apparatus comprising at least one processor that performs, by a mode switching unit, switching an intermediate station that interconnects a base station and a communication device between a base-station mode in which the intermediate station functions as a base station to the communication device and a relay-station mode in which the intermediate station relays communication signal between the base station and the communication device.

2. The communication control apparatus according to claim 1, wherein the intermediate station in the base-station mode comprises a communication-device functional unit that functions as a communication device to the base station and a base-station functional unit that functions as a base station to the communication device.

3. The communication control apparatus according to claim 2, wherein
the intermediate station in the base-station mode is an IAB (Integrated Access and Backhaul) node,
the communication-device functional unit is a MT (Mobile Termination), and
the base-station functional unit is a DU (Distributed Unit).

4. The communication control apparatus according to claim 1, wherein the base-station mode includes a plurality of sub-modes corresponding to the communication resources to be operated in the intermediate station.

5. The communication control apparatus according to claim 4, wherein the plurality of sub-modes includes a sleep mode in which the intermediate station in the base-station mode sleeps.

6. The communication control apparatus according to claim 1, wherein the base station is a flying non-terrestrial base station.

7. The communication control apparatus according to claim 6, wherein the non-terrestrial base station is a communication satellite flying in outer space.

8. The communication control apparatus according to claim 6, wherein the intermediate station flies below the non-terrestrial base station.

9. The communication control apparatus according to claim 1, wherein the intermediate station is located on the ground.

10. A communication control apparatus comprising at least one processor that performs, by a connection control unit, causing a base-station-type intermediate station that interconnects a base station and a communication device and functions as a base station to the communication device, to connect with the communication device preferentially to a relay-station-type intermediate station that relays communication signal of the base station.

11. A communication control apparatus comprising at least one processor that performs, by a connection control unit, causing a relay-station-type intermediate station that interconnects a base station and a communication device and relays communication signal of the base station, to connect with the communication device preferentially to a base-station-type intermediate station that functions as a base station to the communication device.

12. The communication control apparatus according to claim 10, wherein the connection control unit switches between a base-station priority mode in which the communication device is preferentially connected to the base-station-type intermediate station over the relay-station-type intermediate station, and a relay-station priority mode in which the communication device is preferentially connected to the relay-station-type intermediate station over the base-station-type intermediate station.

13. A communication control method comprising switching an intermediate station that interconnects a base station and a communication device between a base-station mode in which the intermediate station functions as a base station to the communication device and a relay-station mode in which the intermediate station relays communication signal between the base station and the communication device.

14. A communication control method comprising switching between a base-station priority mode in which a communication device is preferentially connected to a base-station-type intermediate station that interconnects a base station and the communication device and functions as a base station to the communication device, over a relay-station-type intermediate station that relays communication signal of the base station, and a relay-station priority mode in which the communication device is preferentially connected to the relay-station-type intermediate station over the base-station-type intermediate station.

15. A computer-readable medium storing a communication control program causing a computer to perform switching an intermediate station that interconnects a base station and a communication device between a base-station mode in which the intermediate station functions as a base station to the communication device and a relay-station mode in which the intermediate station relays communication signal between the base station and the communication device.

16. A computer-readable medium storing a communication control program causing a computer to perform switching between a base-station priority mode in which a communication device is preferentially connected to a base-station-type intermediate station that interconnects a base station and the communication device and functions as a base station to the communication device, over a relay-station-type intermediate station that relays communication signal of the base station, and a relay-station priority mode in which the communication device is preferentially connected to the relay-station-type intermediate station over the base-station-type intermediate station.
